# FASCICULE DE BREVET EUROPEEN

(11) **EP 1 741 617 B1**
(45) Date de publication et mention de la délivrance du brevet: **11.11.2009**
(21) Numéro de dépôt: 06291103.7
(22) Date de dépôt: 04.07.2006
(51) Int. Cl.: B62D 25/08, B60J 7/14

(54) **Véhicule à caisse renforcée**
Fahrzeug mit verstärkter Karrosserie
Vehicle with reinforced body

(30) Priorité: 07.07.2005 FR 0507272
(43) Date de publication de la demande: 10.01.2007
(73) Titulaire: Heuliez, 79142 Cerizay Cedex (FR)
(72) Inventeur: Guillez, Jean-Marc, 79140 Cirieres (FR); Queveau, Paul, 79140 Montravers (FR); Queveau, Gérard, 79140 Le Pin (FR)
(74) Mandataire: Pichat, Thierry

(56) Documents cités:
- EP-A- 0 354 325
- AU-B3- 665 926
- DE-U1- 8 334 199
- US-A- 4 950 025
- US-A1- 2002 014 782
- US-A1- 2004 051 340

## Description

L'invention concerne la réalisation d'un véhicule, découvrable.

Le ou les buts ici visés concerne(nt) :
- l'amélioration de la structure de la caisse du véhicule, pour augmenter la sécurité des occupants, et/ou
- l'obtention de mécanismes d'actionnement du toit performants, simples/simplifiés, bien intégrés sur le véhicule, en particulier sur un convertible à toit rigide, où les toits sont lourds et souvent constitués de plusieurs éléments, en particulier plusieurs panneaux.

On connaît des véhicules tels que présentés au préambule de la revendication 1.

Tel est le cas dans DE-83 34 199 U1.

Mais les caisses existantes de ce type peuvent encore être améliorées en termes de sécurité, rigidité et/ou transmission et absorption des efforts, en particulier sur des caisses destinées à des convertibles à toit rigide comme évoqué ci-avant.

Dans ce but, il est ici proposé:
- que le véhicule de l'invention soit découvrable,
- qu'il comprenne en outre :
   * un toit rigide rétractable, comprenant au moins un panneau rigide de toit monté basculant vis-à-vis de la caisse entre une position fermée au-dessus de l'habitacle et une position ouverte atteinte par dégagement du toit jusque derrière cet habitacle,
   * et un dispositif de commande pour le basculement dudit panneau de toit, ce dispositif de commande comprenant un actionneur qui est disposé et agit sensiblement parallèlement audit plan longitudinal vertical et qui est lié à ladite poutre structurelle,
- et le toit, avec certains au moins parmi des éléments comprenant : ledit panneau de toit, l'actionneur, un organe intermédiaire d'entraînement lié audit panneau de toit pour le basculer, mû par l'actionneur et appartenant audit dispositif de commande, des paliers supportant cet organe intermédiaire d'entraînement, est rapporté sur ladite poutre et/ou ses prolongements latéraux), par l'intermédiaire d'une platine additionnelle portant le ou lesdits élément(s).

On conseillera un actionneur unique non pas disposé sur un côté du véhicule mais au voisinage d'un plan central vertical et longitudinal. Quant au toit, il comprendra typiquement au moins deux panneaux rigides.

Parmi les véhicules concernés, on peut citer les cabriolets et coupés découvrables, ou les berlines découvrables avec au moins deux rangées de sièges.

On préfèrera que latéralement, à l'arrière par rapport à l'extrémité où les premiers prolongements latéraux coudés sont raccordés auxdits pieds dressés, la poutre structurelle présente des seconds prolongements latéraux, offrant ainsi une rigidité et une protection latérale renforcées, d'autant plus si, latéralement, le long de ses premiers prolongements latéraux coudés et/ou en extrémité desdits seconds prolongements latéraux, la poutre est raccordée à des doublures latérales de caisse.

Pour limiter les porte-à-faux et bien résister en torsion notamment, on conseille que ladite poutre structurelle soit, là où elle s'étend transversalement audit plan longitudinal vertical, située à l'avant ou à proximité immédiate de l'avant des passages de roues arrière, avec favorablement, à titre complémentaire, le fait que :
- lesdits pieds dressés soient confondus avec les piliers B de la caisse, et/ou
- lesdits longerons latéraux rejoignent les piliers A, et/ou
- lesdits pieds dressés soient reliés entre eux, vers leur extrémité inférieure, par une traverse.

Favorablement, les doublures latérales de caisse comprendront une partie dressée raccordée, en partie inférieure, à un plancher de la caisse et/ou à des extensions des longerons latéraux se terminant au contact de l'avant des passages de roues arrière, et/ou, à l'arrière, auxdits passages de roues.

Concernant la poutre, on remarquera encore que, de façon très préférentielle :
- elle sera continue, donc sans interruption ni espace vide rompant sa continuité longitudinale entre les deux côtés latéraux du véhicule, de manière que les efforts entre ces côtés se transmettre à travers elle,
- elle présentera favorablement une section fermée sur toute sa longueur, hormis d'éventuelles ouvertures localisées,
- et/ou elle sera incurvée avec une concavité dirigée vers l'avant du véhicule, globalement.

Concernant le montage du toit sur la caisse, on offre la possibilité d'un montage par un module complet, en prévoyant que ce toit, avec certains au moins parmi des éléments comprenant son/ses panneau(x) de toit, l'actionneur, un organe intermédiaire d'entraînement (lié au/à l'un de ces panneau(x) de toit pour le basculer et mû par l'actionneur), des paliers supportant cet organe d'entraînement, soit rapporté(s) sur ladite poutre et/ou ses prolongements latéraux, par l'intermédiaire d'une platine additionnelle portant le/lesdits éléments.

Les revendications jointes complètent cette présentation et apportent des solutions favorisant la tenue mécanique de la caisse, la compacité et/ou une combinaison optimisée entre elle et le toit.

D'autres caractéristiques et avantages de l'invention apparaîtront encore de la description plus détaillée qui suit, en référence aux dessins donnés à titre d'exemple et dans lesquels :
- la figure 1 montre schématiquement de côté un véhicule auquel les solutions de l'invention sont applicables,
- la figure 2 montre en perspective locale intérieure, schématique, une partie du véhicule, vers l'arrière du siège droit du véhicule,
- la figure 3 est une vue locale de côté agrandie dans le sens de la flèche III de la figure 2,
- la figure 4 montre plus particulièrement la poutre transversale à laquelle est liée le panneau pivotant directement commandé en rotation par l'actionneur, suivant une perspective à échelle réduite,
- la figure 5 montre en perspective locale en particulier la poutre et son environnement,
- la figure 6 correspond à la vue suivant VI,
- et la figure 7 correspond à la vue suivant VII.

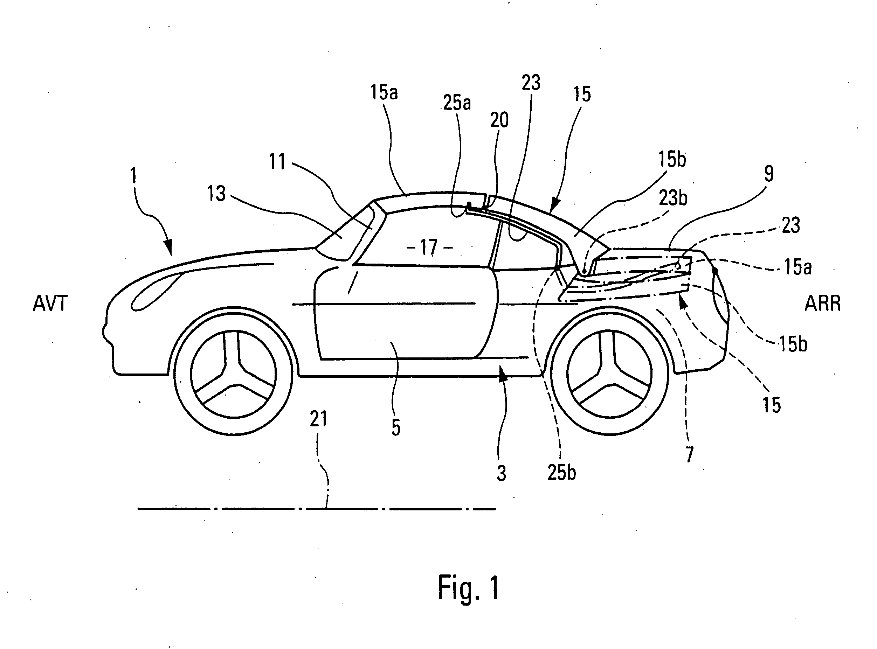

Figure 1, le véhicule 1 comprend un bâti structurel 3, également appelé caisse ou structure du véhicule, qui intègre ici, rapporté sur lui, les portières telles que 5, un coffre arrière 9 et un cadre frontal 11 délimitant un pare-brise 13, notamment.

Le véhicule 1 est un coupé découvrable à toit 15 entièrement escamotable dans le coffre 7, à l'arrière de l'habitacle 17.

Le toit 15 s'articule sur le bâti structurel 3 entre une position fermée représenté en trait plein sur la figure 1 et une position ouverte, repliée, représenté en traits mixtes sur cette même figure. Dans la position fermée, le toit s'étend au-dessus de l'habitacle 17 du véhicule qu'il ferme au moins essentiellement à sa partie supérieure, tandis qu'en position ouverte, le toit est ici disposé derrière l'habitacle.

Le toit 15 comprend plusieurs panneaux de toit rigides, mobiles, adaptés pour recouvrir l'habitacle 17 dans leur première position relative déployée, tout en pouvant être repliés les uns vers les autres dans la deuxième position ouverte, rangée du toit.

Ici, le toit 15 comprend deux panneaux rigides de toit 15a, 15b définissant respectivement un panneau de toit avant et, derrière suivant l'axe 21, un panneau de toit arrière, cette position relative entre les panneaux étant respectée dans la position fermée du toit, tandis que dans la position ouverte, les deux panneaux de toit sont ici disposés l'un au-dessus de l'autre, sensiblement horizontalement, repliés qu'ils sont derrière l'habitacle.

Le toit pourrait comprendre un nombre de panneaux rigides autre que deux.

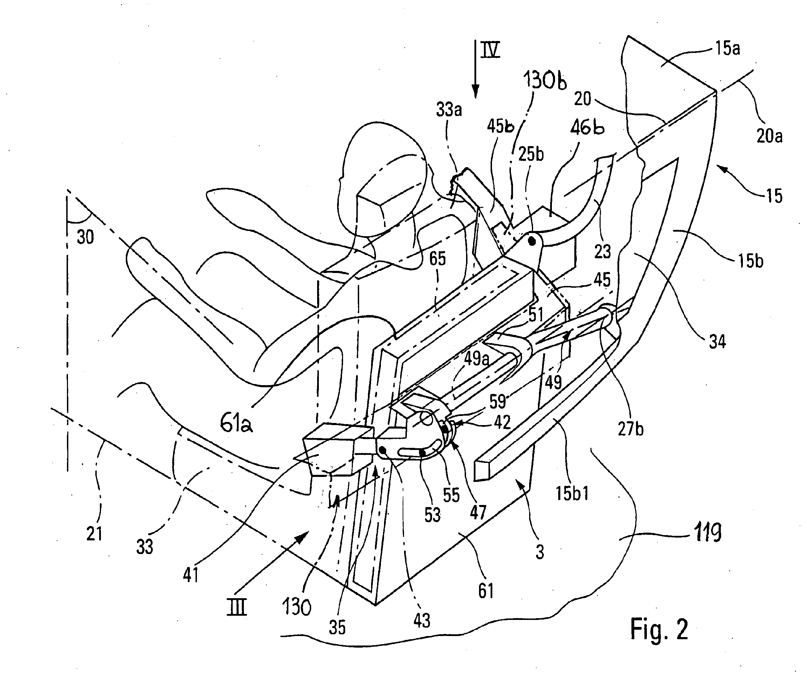

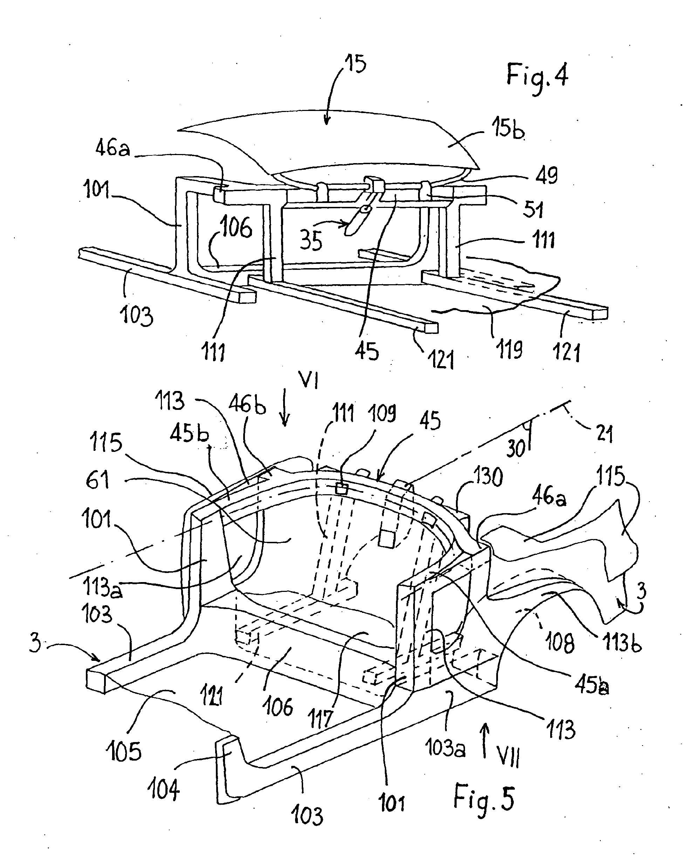

Ici, les éléments de toit avant 15a et arrière 15b sont reliés entre eux, respectivement vers leurs bords arrière et avant, par une articulation 20. Figure 2 on a repéré 20a l'axe d'articulation entre ces panneaux. Cet axe est ici perpendiculaire à l'axe longitudinal 21 du véhicule, ainsi qu'au plan vertical médian 30 parallèle à cet axe 21. Le plan 30 constitue donc globalement le plan de symétrie de part et d'autre duquel se trouvent, sur la figure 4, notamment les sièges gauche 31 et droit 33 (conducteur et passager), situés côte à côte.

Figure 1, AVT et ARR repèrent respectivement l'avant et l'arrière du véhicule, suivant l'axe longitudinal 21.

Pour sa manoeuvre en basculement, le panneau de toit avant 15a est entraîné entre ses positions ouverte et fermée par au moins un bras 23 articulé sur l'arrière du panneau, autour d'un axe transversal 25a. On dénommera « transversal », tout axe transversal à l'axe longitudinal 21 et/ou au plan longitudinal vertical médian 30.

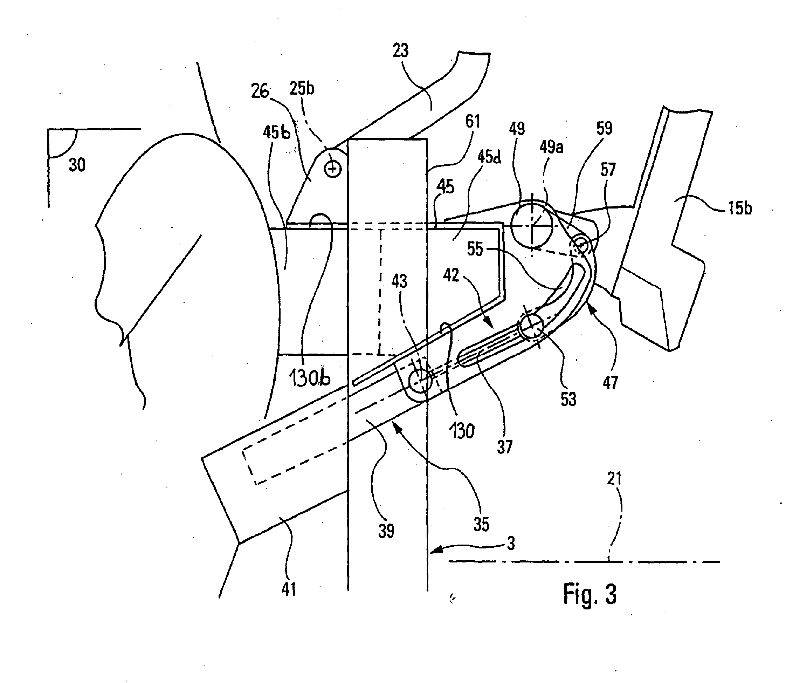

A son autre extrémité, le bras 23 que l'on voit également sur les figures 2 et 3 est articulé vis-à-vis du bâti 3, autour d'un axe transversal 25b.

De préférence, deux bras 23 seront prévus, situés latéralement, chacun de part et d'autre du toit.

En 27b, on a par ailleurs repéré figures 1 et 2 l'un des points latéraux de la liaison, ici rigide, entre le panneau de toit 15b et son mécanisme d'entraînement en basculement.

Bien qu'il puisse en être autrement, le panneau 15b à partir duquel s'effectue la commande en basculement de l'ensemble du toit 15, est ici un panneau arrière de custode s'étendant suivant une surface transversale, en particulier perpendiculaire, au plan longitudinal médian 30. Figure 2, est schématisé en 34 une partie de la lunette arrière du véhicule.

Pour la commande du panneau de toit 15b, un actionneur 35 est disposé et agit sensiblement dans le plan longitudinal vertical médian 30, via les mouvements de sa partie mobile 37.

Cet actionneur 35 (de préférence unique) comprend ici un fût 39 et une tige (pièce mobile 37) montée donc coulissante par rapport à ce fût, sensiblement dans le plan 30. Il est avantageusement situé entre les deux sièges, sensiblement au niveau de leur dossier (figures 2 à 4). Typiquement, il sera légèrement incliné par rapport à l'horizontale.

L'actionneur 35, et en particulier son fût 39, étant donc avantageusement situé entre les parties arrière des sièges, on peut protéger la partie avant la plus proéminente de son fût dans un boîtier 41 (figures 2 et 3) .

La partie fixe, ou fût, 39 de l'actionneur 35 est liée au bâti structurel 3 du véhicule en étant portée par une pièce de guidage 42 liée à ce bâti.

Ici, le basculement du panneau 15b devant typiquement être court, la partie fixe 39 de l'actionneur est avantageusement montée articulée en rotation par rapport au bâti 3, autour d'un axe transversal 43 porté par la pièce de guidage 42 qui constitue une pièce du bâti structurel 3 en ce qu'elle est fixe par rapport à ce bâti et de surcroît avantageusement étroitement fixée à une poutre structurelle 45 s'étendant globalement perpendiculairement à l'axe longitudinal 21 entre les deux bords latéraux gauche et droit du véhicule, comme on le comprend au vu des figures 2 et 5.

La poutre transversale 45 n'est que très schématiquement montrée figures 2 et 4. Une représentation globalement incurvée ou en cuvette, plus exacte, encore qu'uniquement approchante de la réalité pour ses formes locales précises, est montrée figures 3 et 5.

La partie mobile (tige coulissante 37) de l'actionneur 35 est liée de façon articulée, par un système de biellettes 47, à un organe intermédiaire d'entraînement 49 lié, ici directement par une fixation rigide, au panneau de toit 15b pour son basculement.

L'organe intermédiaire 49 est ici animé exclusivement d'un mouvement de rotation autour d'un axe transversal 49a.

Avantageusement, l'organe 49 comprend un tube cintré vers ses extrémités latérales, et s'étendant globalement transversalement au plan longitudinal médian 30, la fixation au panneau 15b s'opérant donc à ses extrémités latérales, en 27b comme déjà indiqué. Les liaisons en 27b entre le tube intermédiaire d'entraînement 49 et le panneau 15b s'opèreront avantageusement à proximité immédiate du bord transversal arrière 15b1 de ce panneau qui apparaît figure 2 comme le bord transversal le plus bas de ce panneau, puisque ce dernier est ici représenté dans une position intermédiaire où il s'étend sensiblement verticalement.

Pour pivoter, l'organe ou tube 49 est fixé (directement ou indirectement, voir ci après platine de montage 130) à la poutre transversale 45 (ou à ses prolongements 45a,45b,45c,45c ; voir ci-après), par des étriers 51 définissant des paliers.

En outre, le tube 49 traverse la pièce de guidage 42 pour pouvoir s'étendre sur l'essentiel au moins de la largeur du véhicule, derrière donc les sièges 33.

La liaison articulée entre la partie mobile de l'actionneur 35 (tige coulissante 37) et l'organe intermédiaire d'entraînement 49, celle-ci est assurée par l'intermédiaire du système de biellettes 47 précité.

Ici, il s'agit de deux biellettes disposées côte à côte, parallèlement au plan 30 et pourvues chacune d'un tourillon tel que 53 figures 2 et 3 s'étendant transversalement à l'axe longitudinal 21, chaque tourillon étant disposé coulissant dans une glissière 55 incurvée vers le haut et vers l'avant pour transformer donc le mouvement de coulissement de la tige 37 en un mouvement de rotation (basculement) communiqué à l'organe intermédiaire 49.

Ainsi chaque biellette 47 est articulée à ses extrémités via des tourillons tels que 53 et 57 vis-à-vis respectivement de la tige 37 et d'un excentrique 59 lié fixement à la pièce intermédiaire, ou tube, 49.

Les biellettes 47 seront avantageusement coudées vers le haut et vers l'avant, comme les fentes 55.

Concernant maintenant l'aspect résistance mécanique/rigidité du véhicule, on notera qu'avantageusement chaque bras latéral 23 lié au panneau de toit avant 15a sera avantageusement fixé, via des paliers tels que 26, sur la platine de montage 130, figs.2 et 3, ou directement sur la poutre structurelle transversale 45 ou sur un prolongement latéral de celle-ci, tel que le prolongement droit repéré 45b figures 2, 3,5 pour le côté droit du véhicule (prolongement gauche 45a figure 5). Ces premiers prolongements latéraux 45a,45b monoblocs avec, ou raccordés en continuité à, la poutre 45 la prolongent vers l'avant à la manière de coudes latéraux. Vers leur extrémité avant, ces premiers prolongements latéraux sont supportés par des pieds dressés 101 fixés sur des longerons latéraux 103 de la caisse. On aurait pu les fixer sur le plancher 105 structurant de cette caisse. A priori, ces pieds 101 seront les deux piliers B de la caisse et les longerons latéraux 103 rejoindront les piliers A 104.

Fig.5, les pieds 101 sont reliés entre eux, transversalement au plan 30, vers leur extrémité inférieure, par une traverse 106.

A l'arrière de ces pieds 101, les longerons latéraux 103 se prolongent par, ou sont raccordés à, des extensions de longerons latéraux 103a se terminant au contact de l'avant des passages de roues 108 prévus sur la caisse pour les roues arrière du véhicule.

Fig.5, chacun des premiers prolongements latéraux définit un coude avec la poutre 45 et s'étend comme elle sensiblement horizontalement. De chaque côté, les prolongements donnent à la poutre une forme sensiblement horizontale en U ou C évasé, ouvert vers l'avant, chaque prolongement s'étendant ainsi en direction de l'arrière de l'une des portières 5 du véhicule. Ainsi, chaque prolongement est situé sensiblement près d'un bord latéral de ce véhicule, à proximité d'un bord latéral correspondant de l'un desdits sièges, tel que le bord latéral extérieur 33a du siège 33 sur la figure 2.

Latéralement, à l'arrière par rapport aux pieds dressés 101, la poutre 45 présente des seconds prolongements latéraux 46a,46b. Avec ses prolongements latéraux, cette poutre est située sensiblement au niveau de la ceinture de caisse et c'est là qu'est situé ledit axe 49a transversal de rotation de l'organe intermédiaire 49 d'entraînement.

Figure 5 (et à la différence de FR-A-2 859 431 sur les côtés de la caisse), on notera qu'entre ses premiers et/ou seconds prolongements latéraux, là où elle s'étend transversalement au plan longitudinal vertical 30, la poutre 45 est continue, donc sans interruption ni espace vide rompant sa continuité longitudinale, de manière à transmettre spécialement à travers elle les efforts entre, latéralement, les deux côtés de la caisse et en particulier les deux longerons latéraux et les deux piliers B . Elle est en outre a priori à section fermée sur toute sa longueur (voir volume clos 45d fig.3), hormis d'éventuelles ouvertures 109 peu nombreuses et localisées ne rompant pas la continuité générale. Elle rigidifiera ainsi notablement la caisse en particulier en torsion et renforcera la résistance en formant avec ses prolongements, voir une/des paroi(s) ou cloison de soubassement 61 et/ou des pieds arrière 111, une sorte de caisson protecteur jusqu'au niveau de la ceinture de caisse. En relation avec cela, la poutre 45, voire l'amorce de ses premiers prolongements, sera favorablement et globalement, comme montré fig.5, incurvée avec une concavité dirigée vers l'avant du véhicule.

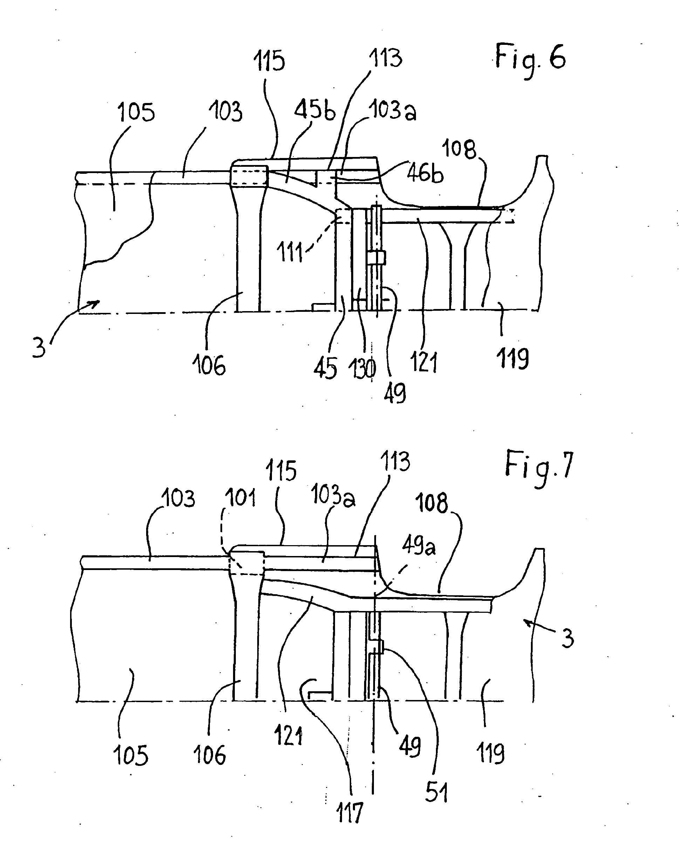

Figs.5 et 6, il est remarquable que la poutre 45 est, là où elle s'étend transversalement au plan 30, située à l'avant ou à proximité immédiate de l'avant des passages de roues 108.

Fig.5 et latéralement, de préférence le long de ses premiers prolongements latéraux coudés 45a,45b et en extrémité des seconds prolongements latéraux 46a,46b, la poutre 45 est raccordée à des doublures latérales de caisse 113 interposées entre des éléments 115 latéraux de carrosserie et, ici, lesdits premiers et seconds prolongements latéraux.

Ceci, ainsi que les caractéristiques qui précèdent, renforce mécaniquement la caisse.

Toujours fig.5, les doublures locales de caisse 113 ou flancs comprennent une partie dressée, ouverte en 113a entre les piliers B et les seconds prolongements 46a,46b. Chaque partie 113 est raccordée à l'arrière, par une partie bombée 113b, aux passages de roues 108, et, de préférence, en partie inférieure, auxdites extensions de longerons latéraux 103a, sinon à la portion de plancher de caisse 117 située entre la traverse 106 et la possible paroi 61 sous-jacente à la poutre 45.

Sous elle et de préférence à l'arrière, la poutre 45 est, là où elle s'étend transversalement au plan 30, en outre soutenue:
- par les pieds arrière dressés 111 reliés à la partie de plancher 119 de caisse (fig.6) ou, comme également fig.5, à des longerons arrière 121 de la caisse,
- et/ou par une ou plusieurs parois dressées 61, s'étendant de façon incurvée transversalement audit plan longitudinal vertical 30 du véhicule et reliée(s) au plancher de caisse voire aux longerons arrière 121.

Si elle existe, cette paroi 61 unique ou multiple sera frontalement raccordée, comme montré fig.5, à la portion 117 de plancher. Latéralement, on conseille un raccordement aux doublures latérales de caisse 113.

Toujours pour une résistance aux efforts, les pieds arrière 111 sont reliés entre eux par la traverse à talons 106. Cette traverse 106 est, avec les pieds arrière, raccordée aux longerons arrière 111, lesquels s'étendent localement entre les passages de roues 108, comme montré figs.5 et 6. Et cette traverse 106 est en outre raccordée aux longerons latéraux 103.

Si, sous la poutre 45, on trouve la cloison 61, celle-ci pourra être double afin de définir au moins un caisson creux 61a en appui sur un soubassement structurel, tel que le plancher déjà cité.

Dans le/chaque caisson 61a sera avantageusement disposée une armature de protection 65 visant, à la manière d'un arceau de sécurité mobile, à protéger les occupants du véhicule en cas de choc et notamment de retournement du véhicule.

Ainsi, chaque armature 65 sera avantageusement montée coulissante verticalement vis-à-vis du caisson correspondant, entre une position basse (position représentée figure 2) dans laquelle l'armature est au moins en partie escamotée à l'intérieur du caisson et une position haute dans laquelle elle se dresse au moins en partie au-dessus de ce caisson, derrière le siège correspondant (position non représentée).

Pour faire se déplacer ainsi et rapidement chaque arceau de protection 65, un système de propulsion par exemple à ressort déclenché par voie pyrotechnique pourra être utilisé, les parois latérales du caisson creux guidant chaque arceau dans son déplacement vertical jusqu'à ce que sa partie supérieure atteigne avantageusement un niveau plus haut que la tête des occupants.

L'actionneur 35 pourra notamment être un vérin par exemple hydraulique ou un système d'actionnement à arbre motorisé, mû par un moteur électrique.

Revenant sur le montage du toit sur la caisse, on a illustré figs.3 et 5 que sont rapportés sur une platine intermédiaire ou additionnelle 130 certains au moins parmi les éléments suivant du toit : son/ses panneaux 15a,15b, l'actionneur 35, l'organe d'entraînement 49 et les paliers 51. Ainsi, on propose de préassembler sur une platine additionnelle le toit et ses éléments constitutifs et de commande (actionneur,biellette..) ou de manoeuvre (paliers, arbre intermédiaire 49...), puis de fixer cette platine sur la poutre 45, voire ses prolongements. La platine pourra être une cornière (voir pointillés 130 fig.3) ou une poutre rapportée fixée à la caisse, en particulier sur la face arrière de la poutre 45.

L'actionneur 35, en particulier sa partie « fixe » 39 et son axe de pivotement pourront être fixés à la poutre 45 ou être porté uniquement par cette « platine » rapportée 130, comme fig.3 ; de même pour le/chaque bras pivotant 23 dont l'extrémité portée par le(s) palier 26 pourra être articulée sur une partie latérale, telle que 130b fig.2 ou 3, de cette platine 130 qui pourra être donc coudée latéralement.

A toutes fins utiles, il est encore précisé ce qui suit :
- la poutre structurelle 45 peut être soutenue, là où elle s'étend transversalement au plan longitudinal vertical 30 du véhicule, par les pieds arrière dressés 111 reliés au plancher de caisse et aux longerons arrière 121 de la caisse,
- et/ou par une ou plusieurs desdits parois dressées 61,61a reliée(s) audit plancher 117,119 de caisse et/ou aux longerons arrière 121 de cette caisse ;
- frontalement la paroi dressée considérée (61, 61a) peut être raccordée au plancher de caisse raccordé lui-même à la traverse 106,
- la partie fixe 39 de l'actionneur peut être montée articulée en rotation sur la poutre structurelle 45 ou la platine intermédiaire 130, autour de l'axe 43 transversal audit plan longitudinal vertical 30 ;
- le tube que peut comprendre l'organe intermédiaire 49 d'entraînement en rotation du panneau de toit considéré peut être raccordé à ce panneau de toit ;
- l'axe 49a peut être transversal au plan longitudinal vertical 30 du véhicule ;
- le bras pivotant 23 peut être articulé, à une extrémité, sur le deuxième panneau de toit 15a et, à une deuxième extrémité, sur les prolongements latéraux 45a,45b de la poutre structurelle 45.

## Revendications

1. Véhicule présentant un avant, un arrière et comprenant une caisse, un habitacle (17), au moins deux sièges côte à côte disposés dans cet habitacle, de part et d'autre d'un plan longitudinal vertical du véhicule, la caisse (3) comprenant, derrière lesdits sièges, une poutre structurelle (45) qui s'étend transversalement audit plan longitudinal vertical (30) et présente des premiers prolongements latéraux (45a,45b) coudés vers l'avant, la poutre structurelle étant supportée par des pieds dressés (101),
**caractérisé en ce que :**
- ce véhicule est découvrable,
- il comprend en outre :
* un toit rigide (15) rétractable, comprenant au moins un panneau rigide de toit (15a,15b) monté basculant vis-à-vis de la caisse (3) entre une position fermée au-dessus de l'habitacle (17) et une position ouverte atteinte par dégagement du toit (15) jusque derrière cet habitacle,
* et un dispositif de commande pour le basculement dudit panneau (15a,15b) de toit, ce dispositif de commande comprenant un actionneur (35) qui est disposé et agit sensiblement parallèlement audit plan longitudinal vertical et qui est lié à ladite poutre structurelle (45),
- et le toit, avec certains au moins parmi des éléments comprenant : ledit panneau de toit, l'actionneur (35), un organe intermédiaire d'entraînement (49) lié audit panneau de toit (15b) pour le basculer, mû par l'actionneur et appartenant audit dispositif de commande, des paliers (51) supportant cet organe intermédiaire (49) d'entraînement, est rapporté sur ladite poutre (45) et/ou ses prolongements latéraux (45a,45b), par l'intermédiaire d'une platine additionnelle (130) portant le ou lesdits êlément(s).

2. Véhicule selon la revendication 1, **caractérisé en ce que** la poutre structurelle est supportée vers l'avant de ses premiers prolongements latéraux (45a,45b) par lesdits pieds dressés (101), lesquels sont fixés sur des longerons latéraux (103,103a) de la caisse et/ou sur un plancher (105,117) de cette caisse.

3. Véhicule selon l'une quelconque des revendications précédentes, **caractérisé en ce que** l'actionneur comprend une partie fixe (39) et une partie mobile (37), la partie fixe (39) étant liée à la caisse (3), la partie mobile (37) étant liée de façon articulée à l'organe intermédiaire d'entraînement (49) qui est fixé à la poutre structurelle (45) ou à la platine additionnelle (130), laquelle est rapportée sur cette poutre (45) et/ou sur ses prolongements latéraux (45a,45b) et porte certains au moins parmi des éléments du toit comprenant ledit panneau de toit, l'actionneur (35), l'organe intermédiaire d'entraînement (49) et des paliers (51) supportant cet organe intermédiaire (49) d'entraînement.

4. Véhicule selon la revendication 3, **caractérisé en ce que** la partie fixe (39) de l'actionneur est portée par la poutre structurelle (45) ou la platine intermédiaire (130) et est montée articulée en rotation sur celle-ci, autour d'un axe (43) transversal audit plan longitudinal vertical (30) du véhicule.

5. Véhicule selon l'une quelconque des revendications précédentes, **caractérisé en ce que** :
- l'organe intermédiaire (49) d'entraînement en rotation dudit panneau de toit comprend un tube raccordé audit panneau de toit et s'étendant globalement transversalement audit plan longitudinal vertical (30) du véhicule,
- et/ou cet organe intermédiaire (49) d'entraînement est animé d'un mouvement de rotation autour d'un axe (49a) transversal audit plan longitudinal vertical (30) du véhicule, est commandé en rotation par l'actionneur (35) et est fixé derrière les sièges (33) à ladite poutre transversale (45) et/ou à la platine additionnelle (130).

6. Véhicule selon l'une quelconque des revendications précédentes, **caractérisé en ce que** l'actionneur (35) est unique et:
- est disposé et agit sensiblement dans ledit plan longitudinal vertical du véhicule, qui est médian,
- et/ou est disposé entre les deux sièges (31,33), sensiblement au niveau de leur dossier.

7. Véhicule selon l'une quelconque des revendications précédentes, **caractérisé en ce que** :
- le toit comprend un deuxième panneau rigide de toit (15a), les premier et second panneaux de toit présentant respectivement un bord avant et un bord arrière, le second panneau de toit étant lié vers son bord arrière et de façon articulée au bord avant du premier panneau de toit, suivant un axe (20a) transversal au plan longitudinal vertical (30) du véhicule,
- le deuxième panneau de toit (15a) est lié à la caisse du véhicule par au moins un bras pivotant (23) articulé sur lui à une extrémité et, à une deuxième extrémité, sur l'un au moins parmi la poutre structurelle (45), ses prolongements latéraux (45a,45b) et la platine additionnelle (130).

8. Véhicule selon l'une quelconque des revendications précédentes, **caractérisé en ce que** latéralement, à l'arrière par rapport à l'extrémité où les premiers prolongements latéraux coudés (45a,45b) sont raccordés auxdits pieds dressés (101), la poutre structurelle présente des seconds prolongements latéraux (46a,46b).

9. Véhicule selon la revendication 1 ou 8, **caractérisé en ce que** latéralement, le long de ses premiers prolongements latéraux coudés (45a,45b) et/ou en extrémité desdits seconds prolongements latéraux (46a,46b), la poutre structurelle est raccordée à des doublures latérales de caisse (113) interposées entre des éléments latéraux de carrosserie (115) et ces premiers et/ou seconds prolongements latéraux.

10. Véhicule selon la revendication 1 ou 8, **caractérisé en ce qu'**entre ses premiers et/ou seconds prolongements latéraux (45a,45b,46a,46b), là où elle s'étend transversalement audit plan longitudinal vertical (30) du véhicule:
- ladite poutre (45) est continue, sans interruption ni espace vide rompant sa continuité longitudinale, de manière à transmettre des efforts à travers elle, à section fermée sur toute sa longueur, hormis d'éventuelles ouvertures localisées,
- et/ou cette poutre (45) est incurvée et présente une concavité dirigée vers l'avant du véhicule, globalement.

11. Véhicule selon l'une quelconque des revendications précédentes, **caractérisé en ce que** :
- lesdits pieds dressés sont les piliers B (101) de la caisse et sont reliés à leur sommet auxdits premiers prolongements latéraux (45a,45b) de la poutre structurelle (45),
- les longerons latéraux (103) auxquels sont fixés ces pieds dressés rejoignent les piliers A (104),
- et lesdits pieds dressés sont reliés entre eux,
transversalement audit plan longitudinal vertical (30) du véhicule, vers leur extrémité inférieure, par une traverse (106).

12. Véhicule selon la revendication 1 ou 8, ou l'une des revendications 9 à 11 s'y rattachant, **caractérisé en ce que** ladite poutre structurelle (45) pourvues de ses premiers et/ou seconds prolongements latéraux (45a,45b,46a,46b) est, là où elle s'étend transversalement audit plan longitudinal vertical (30) du véhicule, située à l'avant ou à proximité immédiate de l'avant de passages de roues (108) prévus sur la caisse pour les roues arrière du véhicule.

13. Véhicule selon la revendication 2, **caractérisé en ce qu'**à l'arrière desdits pieds dressés (101), les longerons latéraux se prolongent par, ou sont raccordés à, des extensions (103a) de longerons latéraux se terminant au contact de l'avant des passages de roues (108) prévus sur la caisse pour les roues arrière du véhicule.

14. Véhicule selon la revendication 9, **caractérisé en ce que** lesdites doublures latérales de caisse (113) comprennent une partie dressée raccordée :
- en partie inférieure, auxdites extensions de longerons latéraux (103a) et/ou à un plancher de la caisse (105, 117),
- et/ou, à l'arrière, aux passages de roues (108) prévus sur la caisse pour les roues arrière du véhicule.

15. Véhicule selon la revendication 1 ou 8, **caractérisé en ce que,** sous elle et à l'arrière, ladite poutre structurelle (45) pourvues de ses premiers et/ou seconds prolongements latéraux est, là où elle s'étend transversalement audit plan longitudinal vertical (30) du véhicule, soutenue en outre:
- par des pieds arrière dressés (111), reliés à un plancher de caisse (119) et/ou à des longerons arrière (121) de la caisse,
- et/ou par une ou plusieurs parois dressées (61,61a), s'étendant de façon incurvée transversalement audit plan longitudinal vertical (30) du véhicule et reliée(s) audit plancher (117,119) de caisse et/ou aux longerons arrière (121) de cette caisse.

16. Véhicule comprenant lesdits pieds arrière dressés selon la revendication 15 non rattachée à la revendication 11, **caractérisé en ce que :**
- ces pieds arrière (111) sont reliés entre eux par une traverse à talons (106),
- ladite traverse est, avec les pieds arrière, raccordée aux longerons arrière (121), lesquels s'étendent localement entre les passages de roues (108) prévus sur la caisse pour les roues arrière du véhicule,
- cette traverse est en outre raccordée aux longerons latéraux (103) auxquels sont fixés lesdits pieds dressés (101) raccordés aux premiers prolongements latéraux coudés (45a,45b) de la poutre structurelle, et ces longerons latéraux s'étendent au moins entre les piliers A (101) et les piliers B (104) de la caisse.

17. Véhicule comprenant la/les paroi(s) dressée(s) selon la revendication 15 non rattachée à la revendication 11 et, le cas échéant, la revendication 9, **caractérisé en ce que** :
- frontalement la paroi dressée considérée (61,61a) est raccordée au plancher (117) de caisse du véhicule qui est raccordé lui-même à une traverse (106), et/ou
- latéralement, cette paroi dressée est raccordée aux doublures latérales de caisse (113).

## Claims

1. Vehicle having a front and a rear and comprising a body, a passenger compartment (17), at least two seats side by side disposed in this passenger compartment, on each side of a vertical longitudinal plane of the vehicle, the body (3) comprising, behind said seats, a structural beam (45) that extends transversely to said vertical longitudinal plane (30) and has first lateral extensions (45a, 45b) angled forwards, the structural beam being supported by erect legs (101),
**characterised in that:**
- this vehicle is convertible,
- it also comprises:
* a retractable rigid roof (15), comprising at least one rigid roof panel (15a, 15b) mounted so as to tilt vis-à-vis the body (3) between a closed position above the passenger compartment (17) and an open position achieved by release of the roof (15) until it is behind this passenger compartment,
* and a control device for the tilting of the roof panel (15a, 15b), this control device comprising an actuator (35) that is disposed and acts substantially parallel to said vertical longitudinal plane and is connected to said structural beam (45),
- and the roof, with at least some of the elements comprising: said roof panel, the actuator (35), an intermediate drive member (49) connected to said roof panel (15b) in order to tilt it, moved by the actuator and belonging to the said control device, bearings (51) supporting this intermediate drive member (49), is attached to the said beam (45) and/or the lateral extensions (45a, 45b) thereof, by means of an additional plate (130) carrying the said element or elements.

2. Vehicle according to claim 1, **characterised in that** the structural beam is supported towards the front of its first lateral extensions (45a, 45b) by said erect legs (101), which are fixed to lateral longitudinal members (103, 103a) of the body and/or to a floor (105, 117) of this body.

3. Vehicle according to any one of the preceding claims, **characterised in that** the actuator comprises a fixed part (39) and a movable part (37), the fixed part (39) being connected to the body (3), the movable part (37) being connected in an articulated fashion to the intermediate drive member (49), which is fixed to the structural beam (45) or to the additional plate (130) which is attached to said beam (45) and/or to the lateral extensions (45a, 45b) thereof and carries at least some of the roof elements comprising the said roof panel, the actuator (35), the intermediate drive member (49) and bearings (51) supporting this intermediate drive member (49).

4. Vehicle according to claim 3, **characterised in that** the fixed part (39) of the actuator is carried by the structural beam (45) or the intermediate plate (130) and is mounted so as to be rotatably articulated on the latter, about an axis (43) transverse to the said vertical longitudinal plane (30) of the vehicle.

5. Vehicle according to any one of the preceding claims, **characterised in that:**
- the intermediate member (49) for rotatably driving the said roof panel comprises a tube connected to the said roof panel and extending roughly transversely to the said vertical longitudinal plane (30) of the vehicle,
- and/or this intermediate drive member (49) is driven in a rotation movement about an axis (49a) transverse to the said vertical longitudinal plane (30) of the vehicle, is rotatably controlled by the actuator (35) and is fixed behind the seats (33) to the said transverse beam (45) and/or to the additional plate (130).

6. Vehicle according to any one of the preceding claims, **characterised in that** the actuator (35) is the only one and:
- is disposed and acts substantially in the said vertical longitudinal plane of the vehicle, which is median,
- and/or is disposed between the two seats (31, 33), substantially level with the backrests thereof.

7. Vehicle according to any one of the preceding claims, **characterised in that:**
- the roof comprises a second rigid roof panel (15a), the first and second roof panels having respectively a front edge and a rear edge, the second roof panel being connected towards its rear edge and in an articulated fashion to the front edge of the first roof panel, on an axis (20a) transverse to the vertical longitudinal plane (30) of the vehicle,
- the second roof panel (15a) is connected to the body of the vehicle by at least one pivoting arm (23) articulated on it at one end and, at a second end, on at least one amongst the structural beam (45), its lateral extensions (45a, 45b) and the additional plate (130).

8. Vehicle according to any one of the preceding claims, **characterised in that** laterally, at the rear with respect to the end where the first angled lateral extensions (45a, 45b) are connected to the said erect legs (101), the structural beam has second lateral extensions (46a, 46b).

9. Vehicle according to claim 1 or 8, **characterised in that**, laterally, along its first angled lateral extensions (45a, 45b) and/or at the end of the said second lateral extensions (46a, 46b), the structural beam is connected to lateral body linings (113) interposed between lateral bodywork elements (115) and these first and/or second lateral extensions.

10. Vehicle according to claim 1 or 8, **characterised in that**, between its first and/or second lateral extensions (45a, 45b, 46a, 46b), where they extend transversely to the said vertical longitudinal plane (30) of the vehicle:
- the said beam (45) is continuous, without interruption or empty space breaking its longitudinal continuity, so as to transmit forces through it, with a closed cross section over its entire length, apart from any localised openings,
- and/or this beam (45) is curved and has a concavity directed roughly towards the front of the vehicle.

11. Vehicle according to any one of the preceding claims, **characterised in that:**
- the said erect legs are the B pillars (101) of the body and are connected at their top to the said first lateral extensions (45a, 45b) of the structural beam (45),
- the lateral longitudinal members (103) to which these erect legs are fixed join the A pillars (104),
- and the said erect legs are connected together, transversely to the said vertical longitudinal plane (30) of the vehicle, towards their bottom end, by a cross member (106).

12. Vehicle according to claim 1 or 8, or one of claims 9 to 11 dependent therefrom, **characterised in that** the said structural beam (45) provided with its first and/or second lateral extensions (45a, 45b, 46a, 46b) is, where it extends transversely to the said vertical longitudinal plane (30) of the vehicle, situated in front of or in the immediate vicinity of the front of the wheel housings (108) provided on the body for the rear wheels of the vehicle.

13. Vehicle according to claim 2, **characterised in that,** at the rear of the said erect legs (101), the lateral longitudinal members are extended by, or are connected to, extensions (103a) of lateral longitudinal members terminating in contact with the front of the wheel housings (108) provided on the body for the rear wheels of the vehicle.

14. Vehicle according to claim 9, **characterised in that** the said lateral body linings (113) comprise an erect part connected:
- at the bottom part, to the said extensions of lateral longitudinal members (103a) and/or to a floor of the body (105, 117),
- and/or, at the rear, to the wheel passages (108) provided on the body for the rear wheels of the vehicle.

15. Vehicle according to claim 1 or 8, **characterised in that,** under it and to the rear, the said structural beam (45) provided with its first and/or second lateral extensions is, where it extends transversely to the said vertical longitudinal plane (30) of the vehicle, also supported:
- by erect rear legs (111), connected to a body floor (119) and/or to rear longitudinal members (121) of the body,
- and/or by one or more erect walls (61, 61a), extending in a curved fashion transversely to the said vertical longitudinal plane (30) of the vehicle and connected to the said body floor (117, 119) and/or to the rear longitudinal members (121) of this body.

16. Vehicle comprising the said erect rear legs according to claim 15 not derived from claim 11, **characterised in that:**
- these rear legs (111) are connected together by a cross member with heels (106),
- the said cross member is, with the rear legs, connected to the rear longitudinal members (121), which extend locally between the wheel housings (108) provided on the body for the rear wheels of the vehicle,
- this cross member is also connected to the lateral longitudinal members (103) to which there are fixed the said erect legs (101) connected to the first angled lateral extensions (45a, 45b) of the structural beam, and these lateral longitudinal members extend at least between the A pillars (101) and the B pillars (104) of the body.

17. Vehicle comprising the erect wall or walls according to claim 15 not derived from claim 11 and, where applicable, claim 9, **characterised in that:**
- frontally the erect wall in question (61, 61a) is connected to the body floor (117) of the vehicle, which is itself connected to a cross member (106), and/or
- laterally, this erect wall is connected to the lateral body linings (113).

## Patentansprüche

1. Fahrzeug mit Frontseite, einer Heckseite und mit einer Karosserie, einem Fahrgastraum (17), wobei in diesem Fahrgastraum wenigstens zwei Sitze beidseitig einer vertikalen Längsebene des Fahrzeugs nebeneinander angeordnet sind, wobei die Karosserie (3) umfasst, hinter den Sitzen einen Konstruktionsträger (45), der sich quer zu der vertikalen Längsebene (30) erstreckt und erste Seitenverlängerungen (45a, 45b) aufweist, die nach vorne gekrümmt sind, wobei der Konstruktionsträger durch ausgerichtete Füße (101) abgestützt wird,
**dadurch gekennzeichnet, dass:**
- dieses Fahrzeug aufdeckbar ist,
- dieses ferner umfasst:
* ein zurückziehbares steifes Dach (15), mit wenigstens einer steifen Dachplatte (15a, 15b), die in Bezug zur Karosserie (3) zwischen einer geschlossenen Position über den Fahrgastraum (17) einer offenen Position schwenkbar montiert ist, die durch eine Freigabe des Daches (15) bis hinter diesen Fahrgastraum erreicht wird,
* und eine Steuereinrichtung für den Schwenkvorgang der Dachplatte (15a, 15b), wobei diese Steuereinrichtung ein Stellglied (35) umfasst, das im Wesentlichen parallel zu der vertikalen Längsebene angeordnet ist und wirkt und das mit dem Konstruktionsrahmen (45) verbunden ist,
- und das Dach, mit wenigstens einigen der folgenden Elemente umfassen: die Dachplatte, das Stellglied (35), ein Zwischen-Antriebsorgan (49), das mit der Dachplatte (15b) verbunden ist, um diese zu schwenken, bewegt durch das Stellglied und zugehörig zur Steuereinrichtung, Lagern (51), welche dieses Zwischen-Antriebsorgan (49) abstützen, ist auf dem Rahmen (45) und/oder seiner seitlichen Verlängerungen (45a, 45b) mittels einer zusätzlichen Halteplatte (130) angebracht, welche das oder die Element(e) trägt.

2. Fahrzeug nach Anspruch 1, **dadurch gekennzeichnet, dass** der Konstruktionsrahmen von seinen ersten seitlichen Verlängerungen (45a, 45b) aus nach vorne durch die ausgerichteten Füße (101) abgestützt ist, welche auf Seitenträgern (103, 103a) der Karosserie und/oder auf einem Boden (105, 117) dieser Karosserie befestigt sind.

3. Fahrzeug nach einem der vorstehenden Ansprüche, **dadurch gekennzeichnet, dass** das Stellglied einen festen Teil (39) und einen beweglichen Teil (37) umfasst, wobei der feste Teil (39) mit der Karosserie (3) verbunden ist, wobei der bewegliche Teil (37) in gelenkiger Weise mit dem Zwischen-Antriebsorgan (49) verbunden ist, das an dem Konstruktionsrahmen (45) oder an der zusätzlichen Halteplatte (130) fixiert ist, wobei dieses auf diesem Rahmen (45) und/oder auf seinen seitlichen Verlängerungen (45a, 45b) angebracht ist und wenigstens einige der folgenden Dachelemente trägt, umfassend die Dachplatte, das Stellglied (35), das Zwischen-Antriebsorgan (49) und Lager (51), welche dieses Zwischen-Antriebsorgan (49) abstützen.

4. Fahrzeug nach Anspruch 3, **dadurch gekennzeichnet, dass** der feste Teil (39) des Stellglieds durch den Konstruktionsrahmen (45) oder die Halteplatte (130) getragen wird und drehgelenkig um eine Achse (43) quer zu der vertikalen Längsebene (30) des Fahrzeugs montiert ist.

5. Fahrzeug nach einem der vorhergehenden Ansprüche, **dadurch gekennzeichnet, dass:**
- das Zwischenorgan (49) zum Drehantrieb der Dachplatte ein Rohr umfasst, das mit der Dachplatte verbunden ist und sich ganz allgemein quer zu der vertikalen Längsebene (30) des Fahrzeugs erstreckt,
- und/oder dieses Zwischen-Antriebsorgan (49) zu einer Drehbewegung um eine Achse (49a) quer zur vertikalen Längsebene (30) des Fahrzeugs angeregt wird, durch das Stellglied (35) drehgesteuert wird und hinter den Sitzen (33) an den Querträger (45) und/oder der zusätzlichen Halteplatte (130) befestigt ist.

6. Fahrzeug nach einem der vorhergehenden Ansprüche, **dadurch gekennzeichnet, dass** das Stellglied (35) einzig vorliegt und:
- im Wesentlichen in der vertikalen Längsebene des Fahrzeugs, die ein Median ist, angeordnet und wirkt,
- und/oder zwischen den beiden Sitzen (31, 33) im Wesentlichen auf Höhe ihrer Lehne angeordnet ist.

7. Fahrzeug nach einem der vorhergehenden Ansprüche, **dadurch gekennzeichnet, dass:**
- das Dach eine zweite steife Dachplatte (15a) umfasst, wobei die erste und die zweite Dachplatte jeweils einen Vorderrand und einen Hinterrand aufweisen, wobei die zweite Dachplatte mit ihrem Hinterrand und in gelenkiger Weise mit dem Vorderrand der Dachplatte verbunden ist, und zwar entlang einer Achse (20a) quer zur vertikalen Längsebene (30) des Fahrzeugs,
- wobei die zweite Dachplatte (15a) mit der Karosserie des Fahrzeugs durch wenigstens einen Schwenkarm (23) verbunden ist, der an dieser mit einem Ende und mit einem zweiten Ende auf wenigstens einem vom Karosserierahmen (45), seinen seitlichen Verlängerungen (45a, 45b) und der zusätzlichen Halteplatte (130) angelenkt ist.

8. Fahrzeug nach einem der vorhergehenden Ansprüche, **dadurch gekennzeichnet, dass** der Konstruktionsrahmen hinten in Bezug zu dem Ende, an welchem die gebogenen ersten seitlichen Verlängerungen (45a, 45b) mit den ausgerichteten Füßen (101) verbunden sind, zweite seitliche Verlängerungen (46a, 46b) aufweist.

9. Fahrzeug nach Anspruch 1 oder 8, **dadurch gekennzeichnet, dass** der Konstruktionsrahmen seitlich entlang seiner ersten gebogenen seitlichen Verlängerungen (45a, 45b) und/oder am Ende der zweiten seitlichen Verlängerungen (46a, 46b) mit seitlichen Verkleidungen der Karosserie (113) verbunden ist, die zwischen Karosserie-Seitenelementen (115) und diesen ersten und/oder zweiten seitlichen Verlängerungen angeordnet sind.

10. Fahrzeug nach Anspruch 1 oder 8**, dadurch gekennzeichnet, dass** zwischen den ersten und/oder zweiten seitlichen Verlängerungen (45a, 45b, 46a, 46b) dort, wo sich diese quer zu der vertikalen Längsebene (30) des Fahrzeugs erstrecken:
- der Rahmen (45) ohne eine seine längliche Kontinuität durchbrechende Unterbrechung oder Lücke derart kontinuierlich ist, dass Belastungen über diesen übertragen werden können, und zwar bei geschlossenem Querschnitt über seine gesamte Länge, außer eventueller lokaler Öffnungen, und
- und/oder dieser Rahmen (45) gekrümmt ist und eine Konkavität aufweist, die ganz allgemein zur Vorderseite des Fahrzeugs gerichtet ist.

11. Fahrzeug nach einem der vorhergehenden Ansprüche, **dadurch gekennzeichnet, dass:**
- die ausgerichteten Füße die B Säulen (101) der Karosserie sind und an ihrer Spitze mit den ersten seitlichen Verlängerungen (45a, 45b) des Konstruktionsrahmens (45) verbunden sind,
- die Querholme (103), an welchen diese ausgerichteten Füße befestigt sind, die Säulen A (104) wieder zusammenfügen,
- und die ausgerichteten Füße untereinander quer zur vertikalen Längsebene (30) des Fahrzeugs durch eine Traverse (106) an ihrem unteren Ende verbunden sind.

12. Fahrzeug nach Anspruch 1 oder 8 oder einem der Ansprüche 9 bis 11 soweit darauf zurückbezogen, **dadurch gekennzeichnet, dass** der Konstruktionsrahmen (45) der mit seinen ersten und/oder zweiten seitlichen Verlängerungen (45a, 45b, 46a, 46b) versehen ist, dort, wo sich dieser quer zu der vertikalen Längsebene (30) des Fahrzeugs erstreckt, vor oder in unmittelbarer Nähe vor den Radläufen (108) liegt, die an der Karosserie für die Hinterräder des Fahrzeugs vorgesehen sind.

13. Fahrzeug nach Anspruch 2, **dadurch gekennzeichnet, dass** hinter den ausgerichteten Füßen (101) sich die Querholme durch Erstreckungen (103a) der Querholme verlängern oder mit diesen verbunden sind, die in Kontakt vor den Radläufen (108) enden, die an der Karosserie für die hinteren Räder des Fahrzeugs vorgesehen sind.

14. Fahrzeug nach Anspruch 9, **dadurch gekennzeichnet, dass** die seitlichen Verkleidungen der Karosserie (113) einen ausgerichteten Bereich umfassen, der verbunden ist:
- im unteren Bereich mit Erstreckungen der Seitenträger (103a) und/oder einem Boden der Karosserie (105, 117),
- und/oder an der Heckseite mit den Radläufen (108), die an der Karosserie für die hinteren Räder des Fahrzeugs vorgesehen sind.

15. Fahrzeug nach Anspruch 1 oder 8, **dadurch gekennzeichnet, dass** unter diesem und an der Heckseite der Konstruktionsrahmen (45), der mit seinen ersten und/oder zweiten seitlichen Verlängerungen versehen ist, dort, wo sich dieser quer zur vertikalen Längsebene (30) des Fahrzeugs erstreckt, ferner unterstützt wird:
- durch hintere ausgerichtete Füße (111), die mit einem Boden der Karosserie (119) und/oder hinteren Trägern (121) der Karosserie verbunden sind,
- und/oder durch eine oder mehrere ausgerichtete Wände (61, 61a), die sich in gebogener Weise quer zur vertikalen Längsebene (30) des Fahrzeugs erstrecken und mit dem Boden (117, 119) der Karosserie und/oder mit den hinteren Trägern (121) dieser Karosserie verbunden sind.

16. Fahrzeug mit ausgerichteten hinteren Füßen nach Anspruch 15, nicht zurückbezogen auf Anspruch 11, **dadurch gekennzeichnet, dass:**
- diese hinteren Füße (111) untereinander durch eine Traverse aus Ansätzen (106) verbunden sind,
- wobei die Traverse mit den hinteren Füßen mit den hinteren Trägern (121) verbunden sind, welche sich lokal zwischen den Radläufen (108) erstrecken, die an der Karosserie für die hinteren Räder des Fahrzeugs vorgesehen sind,
- wobei diese Traverse ferner mit seitlichen Trägern (103) verbunden sind, an welchen die ausgerichteten Füße (101) fixiert sind, die mit den ersten seitlichen gebogenen Verlängerungen (45a, 45b) des Konstruktionsrahmens verbunden sind, und sich diese seitlichen Träger wenigstens zwischen den Säulen A (101) und den Säulen B (104) der Karosserie erstrecken.

17. Fahrzeug mit der/den ausgerichteten Wand/Wänden nach Anspruch 15, nicht zurückbezogen auf Anspruch 11 und gegebenenfalls auf Anspruch 9, **dadurch gekennzeichnet, dass:**
- die betreffende ausgerichtete Wand (61, 61a) stirnseitig mit dem Boden (117) der Karosserie des Fahrzeugs verbunden ist, der selbst mit einer Traverse (106) verbunden ist, und/oder
- diese ausgerichtete Wand querseitig mit seitlichen Verkleidungen der Karosserie (113) verbunden ist.
